Europäisches Patentamt

European Patent Office

Office européen des brevets

(19)

(11) Publication number: **0 243 725**
**A2**

## (12) EUROPEAN PATENT APPLICATION

(21) Application number: 87104943.3

(51) Int. Cl.⁴: **C22B 34/12**

(22) Date of filing: 03.04.87

The title of the invention has been amended (Guidelines for Examination in the EPO, A-III, 7.3).

(30) Priority: 03.04.86 US 847521

(43) Date of publication of application:
04.11.87 Bulletin 87/45

(84) Designated Contracting States:
AT BE CH DE ES FR GB GR IT LI LU NL SE

(71) Applicant: **E.I. DU PONT DE NEMOURS AND COMPANY**
**1007 Market Street**
**Wilmington Delaware 19898(US)**

(72) Inventor: **Chao, Tze**
**132 Osage Lane**
**Newark, Delaware 19711(US)**

(74) Representative: **Abitz, Walter, Dr.-Ing. et al**
**Abitz, Morf, Gritschneder, Freiherr von Wittgenstein Postfach 86 01 09**
**D-8000 München 86(DE)**

(54) Method for purifying titanium oxide ores.

(57) $TiO_2$ ore is purified by roasting with an alkali metal compound and leaching with a nonsulfuric mineral acid. If undesirable iron containing minerals are present in the ore, carbon can be incorporated in the roasting step followed by magnetic separation to remove the iron containing minerals. Or, to remove the iron containing minerals, the ore can be subjected to a separate iron removing process which consists of roasting with carbon, followed by magnetic separation. The separate iron removing process can be done before or after the roasting with an alkali metal compound. The purified $TiO_2$ can be used for any process where a purified ore is desired. Preferred is using the ore to make $TiO_2$ pigment.

EP 0 243 725 A2

## METHOD FOR PURIFYING TiO₂ ORE

BACKGROUND OF THE INVENTION

This invention relates to an improved method for purifying $TiO_2$ ore which contains numerous impurities. The purified ore can be used to make $TiO_2$ pigment or titanium metal or be used in any other process where a purified $TiO_2$ ore is required.

Currently, approximately 75 percent of the titanium minerals produced in the world are utilized by the pigments industry to produce $TiO_2$. In the production of $TiO_2$ by the chloride process, beneficiated ore is used which generally contains about 55-96% $TiO_2$. However, known beneficiation processes do not appear to be capable of satisfactorily purifying $TiO_2$ ore which contains numerous impurities such as alkali metals, alkaline earth metals, rare earth metals, iron, aluminum, phosphorus. thorium, uranium, chromium, manganese, silicon, vanadium, and yttrium. These impurities may be present as oxides, salts, or other complex forms and generally cannot be readily removed by conventional mechanical means. Especially detrimental to the chloride process are such ores which contain in considerable quantity the impurities of iron, calcium, phosphorus, magnesium, barium and strontium, and radionuclides such as thorium and uranium.

Being able to remove such impurities efficiently would be highly desirable because known sources of $TiO_2$ ore not containing such impurities are increasingly becoming scarce and expensive. Conversely, there exists large bodies of rich, inexpensive carbonatite anatase ores which contain such impurities.

Moreover, certain problems are evident with existing commercial $TiO_2$ ore purification processes and $TiO_2$ production processes including the following: ore leaching generally requires the use of expensive strong acids or even pressure at elevated temperatures; the use of strong acids tend to decompose the ore particles into fines which are difficult to process in the $TiO_2$ chloride process; ferric chloride and a dilute HCl, waste byproducts from $TiO_2$ production by the chloride process. are disposal problems which could be reduced by their use in $TiO_2$ ore leaching; significant quantities of $TiO_2$ often are lost in the ore purification process; and while known ore purification processes may remove some impurities, they can tend to hinder the removal of other impurities present in the ore. Finally, while other processes to purify $TiO_2$ ore are known, it appears that they either require additional, more complex or more expensive processing steps or are deficient in one or more benefits as compared to the process of this invention.

SUMMARY OF THE INVENTION

According to this invention there is provided a process for purifying $TiO_2$ ore comprising:

(a) roasting $TiO_2$ ore with an effective amount of an alkali metal compound comprising alkali metal carbonates. hydroxides, chlorides or mixtures thereof, at a temperature and for a time sufficient to convert substantially the alkali metal, alkaline earth metal, rare earth metal. aluminum, phosphorous. thorium, uranium, chromium, manganese. silicon, vanadium, and yttrium impurities in the ore to a form which is substantially soluble in the leaching step (b) below,

(b) leaching the product of step (a) with an effective amount of an aqueous nonsulfuric mineral acid solution at a temperature and for a time sufficient to solubilize substantially the alkali metal. alkaline earth metal. rare earth metal. aluminum, phosphorous. thorium, uranium. chromium. manganese. silicon. vanadium, and yttrium impurities present and form a leachate, and

(c) removing the leachate from the product of step (b).

Preferably, the ore which will be processed in accordance with this invention will be in particulate form. Also, prior to step (a). it often is preferable to subject the ore to mineral dressing.

If undesirable amounts of nonmagnetic iron containing minerals are present in the ore, they can be removed by utilizing the above-described process; provided. however. that there is incorporated in step (a) an effective amount of a reducing agent to convert substantially the nonmagnetic iron containing minerals in the ore to a magnetic form, and prior to step (b), the product of step (a) is subjected to a magnetic separation process so that the magnetic form of the minerals present are substantially removed. However. if desired. the foregoing process for removing nonmagnetic minerals can be utilized separately, rather than combining with step (a). For example. it may be used before step (a). between step (a) and step (b), or after step (c).

There is also provided by this invention $TiO_2$ pigment which is produced from the purified $TiO_2$ ore of this invention by the chloride process.

0 243 725

In accordance with this invention, it has been found that the aforementioned impurities can be readily reduced to an acceptable level, and especially for making $TiO_2$ by the chloride process. It also has been found that (1) relatively dilute acids often can be used for the ore leaching step which are less expensive and produce less amounts of waste streams than strong acids; (2) ferric chloride and HCl, byproducts from $TiO_2$ produced by the chloride process, can be used as the acid in the leaching step, which will reduce the problem of disposing of such acid; (3) less $TiO_2$ loss is apparent with the overall ore processing; (4) the roasting step is moderate; therefore, the ore roaster, which is often used in the chloride $TiO_2$ process for removing hydrogen from $TiO_2$ ores before chlorination, can be used for the roasting step of this invention. Finally, the process of this invention is highly useful and desirable because it will make practical the utilization of low grade, inexpensive and more abundant $TiO_2$ ore which contains numerous impurities. The process is also simple and requires few steps.


## DETAILED DESCRIPTION OF THE INVENTION

### Ore

It is believed that any $TiO_2$ ore in any form can be used for the process of this invention including anatase, ilemenite and rutile. Preferred is anatase and especially preferred is anatase from a carbonatite source. However, if the ore contains iron which is desired to be removed by the magnetic separation process of this invention, preferably anatase ore should be used.

The following sets forth the mineral composition of a typical anatase ore which is suitable for being processed in accordance with one process of this invention:

Ti Minerals     Major: Anatase $TiO_2$

    Minor: Ilmenite $FeTiO_3$
      Schorlomite $Ca_3(Fe, Ti)_2 (Si, Ti)_3O_{12}$
      Ti-pyroxenite (e.g. Ti-biotite)


Fe Minerals     Major: Magnetite $Fe_3O_4$

    Minor: Goethite FeOOH
      Hematite $\alpha\text{-}Fe_2O_3$
      Ilmenite $FeTiO_3$
      Schorlomite $Ca_3(Fe, Ti)_2(Si, Ti)_3O_{12}$


Al Minerals     Major: Wavellite $Al_6(PO_4)_4(OH)_6 \bullet 9H_2O$
Crandallite $CaAl_3(PO_4)_2(OH)_5 H_2O$

    Minor: Phlogopite $KMg_3(Si_3A10_{10})(OH)$


Ca Minerals     Major: Crandallite
      Hydroxyapatite $Ca_5(PO_4)_3(OH)$
      Calcite $(CaCO_3)$

    Minor: Perovskite $CaTiO_3$
      Pyroxene (e.g. Diopside)


P and Rare Earth Minerals     Major: Rhabdophane $(La, Nd, Y)(PO_4) \bullet H_2O$

    Crandallite sub-group minerals such as Florencite
    $CeAl_3(PO_4)_2(OH)_5 \bullet H_2O$

3

Minor: Brockite (RE, Th)(PO₄)• H₂O
Aeschynite (Ce, Ca, Fe, Th)(Ti, Nb)₂(O, OH)₆

Other Minerals (gangue)Vermiculite Mg₁₁Al₅FeSi₁₁O₄₂ • 40H₂O
Quartz SiO₂
Wavellite Al₆(PO₄)₄(OH)₆ • 9H₂O
Some amorphous phase
Pyroxenes
Clay minerals

Impurities

The impurities which can be removed in accordance with the process of this invention include alkali metals, alkaline earth metals, rare earth metals, iron, aluminum, phosphorous, thorium, uranium, chromium, manganese, silicon, vanadium and yttrium. Especially suitable for removal by the process of this invention are the impurities of iron, aluminum, calcium, barium, strontium, chromium, manganese, phosphorus, silicon, vanadium, yttrium, lanthanum, cerium, neodymium, thorium, and uranium. The impurities of iron, calcium, barium, strontium, and radionuclides such as thorium and uranium are especially detrimental to the chloride process for making TiO₂ pigment; such impurities can be readily reduced by the process of this invention. By the term "impurities" is meant the foregoing metals in their elemental state, oxides thereof, salts thereof and other complexes thereof which cannot readily and/or economically be removed by conventional separation processes.

Particle Size of Ore

For the process of this invention, preferably, the ore should be in particulate form. The optimum particle size for any TiO₂ ore desired to be processed can readily be determined by comminuting (such as by grinding, crushing, milling, etc.) the ore into several different particle sizes and evaluating the amount of impurities removed by the process of this invention.

The objective is to liberate the minerals to be separated from the ore, i.e., to comminute the ore into as fine particles as practical so that the presence of discrete minerals or nearly discrete minerals in the particles is substantially improved, i.e., by at least 10%.

Ordinarily, the ore should have a particle size of less than about one-fourth inch. If the ore, after treatment in accordance with this invention, is to be used in the chloride process for making TiO₂, the particle size can be adjusted so that it is compatible with such process. In such case, the particles will generally fall within the range of about -20 mesh to +200 mesh. Of course, some ores in their natural state have a particle size within this range. If so, additional comminuting is not necessary.

Mineral Dressing

If desired, the ore can be subjected to mineral dressing. By mineral dressing is meant mechanical processes which can remove some of the undesired impurities, including desliming (removing fine particles by a cyclone, grating or settling process), crushing, grinding, classification, screening, floatation, electrostatic separation and magnetic separation. Suitable mineral dressing processes are disclosed in U.S. Patent 4,243,179, which is hereby incorporated by reference. If the ore is subjected to mineral dressing, it can be designed to reduce the ore to the desired particle size.

## Roasting

The roasting process can be carried out by any suitable means, process or device. For example, a fixed bed, rotary kiln, fluidized bed, batch or continuous process can be utilized.

In the roasting step, there is utilized an alkali metal compound comprising alkali metal carbonates, hydroxides, chlorides or mixtures thereof. By alkali metal is meant metals comprising Group IA of the Periodic System, i.e., lithium, sodium, potassium, rubidium, cesium and francium. Preferred are lithium carbonate, potassium carbonate and sodium carbonate. Especially preferred is sodium carbonate.

The alkali metal compound should be used in an effective amount, i.e., in an amount sufficient to convert substantially the impurities present to a form which is soluble in the acid used in the leaching step. Ordinarily, the alkali metal compound will be used in an amount of about 1-20%, preferably about 2-15%, and most preferably about 3-12% based on the weight of the $TiO_2$ ore.

The temperature and the time for the roasting step should also be sufficient to convert substantially the impurities to a form which is soluble in the acid. Generally, the roasting will be at a temperature of at least about 600°C. Suitable ranges include about 600-1100°C, preferably about 650-850°C, and most preferably about 700-800°C. If the magnetic separation step is utilized, the preferable temperature is about 700-1000°C and most preferably about 800-900°C. The time for the roasting should be at least about 15 minutes. Typical ranges of roasting times are about 15 minutes to four hours, preferably about 15 to 120 minutes, and most preferably about 30-60 minutes.

By the term "convert substantially," which is used in the immediately two preceding paragraphs, is meant an amount of the alkali metal compound, and the conditions of temperature and time, which will render at least about 10% of the total combined impurities in the $TiO_2$ ore to a form which is soluble in the leaching step. Preferably, the conditions will render at least about 50% of the combined impurities to a form which is soluble in the leaching step. And, using optimum amounts of alkali metal compound and conditions of time and temperature, it has been found that it is possible to remove about 60-90% of the total combined impurities.

For the particular ore involved, the optimum amount of alkali metal compound as well as time and temperature for the roasting can readily be determined by using various amounts of such compound and roasting at various times and temperatures, leaching as defined in step (b), removing the leachate, and thereafter assaying the resulting ore to determine the amount of impurities remaining in the ore. Too long a roasting time or roasting at too high a temperature may be undesirable because it can tend to enhance the formation of more and/or new crystalline structures of the mineral impurities, or iron titanate, both of which will be relatively insoluble in the leaching step. A graph of the amounts of alkali metal compound and conditions of temperature and time compared to the amount of removal of impurities often will be helpful to determine trends and optimizations.

While not wishing to be bound by any particular theory, it is believed that the roasting step renders the mineral impurities more soluble in the leaching step by dehydrating the mineral impurities, converting the crystalline forms of the impurity minerals to amorphous forms, and opening up the pore structure of the ore. The conversion of the crystalline form of the mineral impurities to amorphous form can be determined by examining the ore, before and after roasting, with x-ray diffraction. The opening up of the pore structure of the ore can be observed by examining the ore under suitable magnification or by measuring the pore size distribution.

## Magnetic Separation

If an undesirable amount of nonmagnetic iron containing minerals are present, there can be incorporated in the roasting step an effective amount of reducing agent to convert substantially the nonmagnetic iron containing minerals in the ore to magnetic form. The effective amount will ordinarily be at least the stoichiometric amount required to convert enough iron, in the ore particles containing iron, from the plus 3 valence state to the plus 2 valence state to render such ore particles magnetic. By "convert substantially" is meant the amount of reducing agent to convert at least about 10% of the total iron to its magnetic form. Preferably, the amount of reducing agent used will convert at least about 50% of the iron to its magnetic form. Typically, the amount of reducing agent used will be about 1-10%, and preferably about 2-8% and most preferably about 3-7% based on the weight of the ore.

If a reducing agent is incorporated in the roasting step, then preferably the alkali metal compound incorporated in the roasting step will be an alkali metal hydroxide, carbonate, or mixture thereof. When the reducing agent is incorporated in the roasting step, the presence of appreciable amounts of alkali metal chloride or chloride ion should be avoided because it has been found that such chlorides inhibit the conversion of the nonmagnetic iron containing minerals in the ore to the magnetic form.

The reducing agent can be any carbonaceous containing material, including petroleum or coal based coke, charcoal, coal, lignite, carbon monoxide, or producers gas. The reducing agent can also be hydrogen or any other reducing agent which is capable of converting the iron containing minerals in the ore to a magnetic form. Preferred are carbonaceous reducing agents.

Following the roasting step, the ore is subjected to a magnetic separation process to remove the magnetic form of the iron. By the term "magnetic separation" is meant any process which is capable of removing the magnetic form of the iron due to being subject to magnetic or electromagnetic forces. Examples include exposing the ore to the force of permanent magnet or electromagnet sources.

It has been found that an especially good method for the magnetic separation process involves placing the particulate roasted ore in water or other liquid and then subjecting it to the magnetic separation process. Another method is to conduct the magnetic separation in the dry state if a high tension or electrostatic scavanging step is desired to remove certain gangue minerals particles.

Determining the optimum conditions for the magnetic separation can readily be determined. For example, one can vary the amounts of reducing agent and oxygen partial pressure, the type and amount of alkali metal compound, conditions of temperatures and times for roasting, and conditions of magnetic forces and then determine the amount of removal of the nonmagnetic form of iron originally present in the ore. A graph of the conditions compared to the amount of iron removal often will be helpful to determine trends and optimizations.

If desired, instead of combining the magnetic separation process with the roasting, it can be performed separately. For example, it can be done prior to step (a), between step (a) and step (b) or after step (c).

Leaching

In the leaching step, there is utilized an aqueous nonsulfuric mineral acid solution. Preferred are ferric chloride, hydrochloric acid, nitric acid, hydrofluoric acid and mixtures thereof. Especially preferred are hydrochloric acid and ferric chloride, and mixtures thereof. Sulfuric acid should not be used because it tends to form insoluble sulfates of certain impurities which redeposit on the ore surface and plug up the open pores in the ore.

The acid should be utilized in an effective amount, i.e., an amount sufficient to solublize substantially the impurities. Analysis of the leachate, i.e., the acid solution containing the dissolved impurities, and the leached ore can readily determine whether or not the amount of acid is sufficient. The acid concentration should be at least 1% by weight, based on the total weight of the solution. Ordinarily, the acid will be present in an amount of about 1-40% by weight, based on the total weight of the solution. However, it has been found that dilute concentrations are generally effective such as about 1-10%, preferably about 1-6%, more preferably about 2-5 percent, and still more preferably about 3-4 percent, based on the total weight of the solution. To minimize costs, the most dilute acid should be used which will produce the desired results. Plentiful supplies of dilute, waste mineral acid, and especially HCl, are often available from industrial sources and can be used in the leaching step of this invention. For example, ferric chloride and HCL are available as a waste byproduct from $TiO_2$ production by the chloride process.

The leaching will take place at a temperature and for a time which is sufficient to solubilize substantially the mineral impurities present. Ordinarily, the time required will be at least about 10 minutes. Typical ranges of time are about 10 minutes to four hours, preferably about 15 minutes to four hours and most preferably about 20-40 minutes. The temperature will ordinarily be at least about ambient temperature. Typical temperature ranges are about ambient temperature up to the boiling point of the leachate, preferably about 70-100°C, and most preferably about 80-100°C.

By the term "solubilize substantially," as used in the immediately preceding two paragraphs, is meant the amount of acid and conditions of temperature and time which will solubilize at least about 10% by weight of the impurities. Preferably, at least 50% of the impurities will be solubilized. Often, a graph of the concentration of the acid, and conditions of temperature and time, compared to the amount of impurities removed will help to determine trends and optimizations.

## Removing the Leachate

Following the leaching step, the leachate is removed from the treated TiO$_2$ ore. Preferably, this is done by removing the leachate followed by washing with water or by washing with water alone. The amount of washing required can readily be determined by analyzing the wash water for the presence of impurities and acid.

## Use of Treated Ore

After the ore has been treated in accordance with the process of this invention, it can be used to make TiO$_2$ pigment or titanium metal, or be used in any process where a purified TiO$_2$ ore is desired. Preferably, the TiO$_2$ ore treated by the process of this invention can be used to make TiO$_2$ pigment, and most preferably, to make TiO$_2$ pigment by the chloride process. Suitable chloride proceses and reactors for using the TiO$_2$ ore treated in accordance with the process of this invention are disclosed in U.S. Patents 2,488,439, 2,488,440, 2,559,638, 3,203,763, 2,833,626, 3,284,159, and 2,653,078, which are hereby incorporated by reference.

## Examples

In the following examples, unless otherwise indicated, at least about 95% by weight of the particle size of the TiO$_2$ ore was in the range of -20 to +200 mesh; the mineral dressing process used comprised crushing the ore, subjecting it to wet and/or dry magnetic separation to remove substantially the magnetic iron present, and removing particles of less than about 20 microns in size; and the magnetic strength used in the magnetic separation process after the roasting step was approximately 500-1000 Gauss.

## Example 1

Mineral dressed anatase TiO$_2$ ore, in the amount of 30 grams, and having the analysis shown in Table 1, column 1, was mixed with 2.0 grams of Na$_2$CO$_3$ in a lab vibratory mixer for 30 seconds. The mixture was then roasted in air at approximately 800°C for 2 hours. The roasted sample was then leached for 2 hours at 90°C with 300 ml of water acidified with HCl to an acid strength equivalent to approximately 3% HCl. The leached ore sample was filtered, washed, dried and analyzed. The final treated ore had an analysis as shown in Table 1, column 2. There was almost no change in particle size distribution after the foregoing process.

## Example 2

Another 30 grams of the mineral dressed anatase TiO$_2$ ore of Example 1 were treated in a manner similar to that of Example 1 except that the ore sample was roasted with soda ash at 900°C instead of 800°C. The final treated ore had the composition shown in Table 1, column 2. As can be seen from a comparison of columns 1 and 2 of Table 1, the 900°C roast produces greater reductions in Fe$_2$O$_3$, Al$_2$O$_3$, CaO, SrO, P$_2$O$_5$, SiO$_2$, La$_2$O$_3$, CeO$_2$, Nd$_2$O$_3$, ThO$_2$ and U$_3$O$_8$.

## Example 3

The mineral dressed TiO$_2$ anatase ore of Example 1 was treated in a similar manner as described in Example 1 except that the leaching operation was carried out at room temperature (approximately 25°C) instead of 90°C. The resulting product had the analysis shown in Table 1, column 4.

Example 4

Mineral dressed TiO₂ anatase ore, in the amount of 150 grams, and having 98% by weight within the particle size range of -50 to +200 mesh had the chemical analysis shown in Table 2, column 1. Such ore was mixed with 10.71 grams of Na₂CO₃ and 10.71 grams of petroleum coke (-140 mesh) in a lab vibratory mixer for 30 seconds. The mixture was then calcined in air at 900°C for 60 minutes. The roasted ore was next poured in water and subjected to low intensity wet magnetic separation. About 29% of the ore was removed as a highly magnetic material after magnetic separation. The nonmagnetic fraction was then leached with a FeCl₃ solution of various strengths (5, 10, 20, 30 and 40% by weight) at 90°C for 1 hour. After leaching, the leachate was decanted, and the solid residue was rinsed and decanted with hot water several times before drying. Both the leachate and the dried ore residue were analyzed. The resulting ore residues had the analyses as shown in Table 2. From the data, it is seen that for this ore, the 5% FeCl₃ solution is nearly as effective a leachant as the 20% solution.

Example 5

A 33 mm inside diameter fluid bed reactor was used to study the bed sticking and leaching response of the soda ash/carbon roasted TiO₂ anatase ore. The experimental conditions were as follows:

| | |
|---|---|
| Temperature | $900° \pm 1°C$ |
| Gas Velocity (@900°C) | 0.8 feet/second |
| Fluidizing Gas | $N_2$ |
| Mineral Dressed TiO₂ Ore | 60.00 grams |
| Na₂CO₃ | 5% by weight |
| Coke (−80 + 140 mesh) | 5% by weight |
| Time | 60 min. |

After roasting in the fluid bed reactor, the ore was wet magnetically separated to remove the magnetite before leaching with a 3% HCl solution at 90°C for 60 minutes. A similar quantity of ore was also treated in a manner similar to that described in Example 1. Analysis showed that the fluid bed roasting produced a beneficate of similar quality as the same ore subjected to open air fixed bed roasting. The results are summarized in Table 3.

Example 6

A weight of 312.94 grams TiO₂ anatase ore was ball milled and deslimed in a small batch deslimer. The deslimer consisted of a vessel with a stirring mechanism and means for adjusting the flow of water from the bottom to the top of the vessel. The deslimer removed small particles of generally less than 20 microns size. The original ore, in the dry state, had the chemical composition shown in Table 4, column 1. A total of 73.14 grams or 23.37% by weight of the feed was rejected as slime. The deslimed ore was then subjected to wet magnetic separation with a permanent magnet (approximately 600 Gauss) several times, yielding 128.21 grams (40.97% by weight of total feed) of magnetic fraction and 111.59 grams (35.66% by weight of total feed) nonmagnetic fraction. The final product (or nonmagnetic fraction) had the chemical composition as shown in Table 4, column 2.

Example 7

The product of Example 6 can be used as the feed for Examples 1-5.

8

Example 8

In the manner shown in Examples 1-6, nitric acid can be used in the leaching step.

Example 9

In the manner shown in examples 1-6, potassium carbonate can be used in the roasting step.

Example 10

One hundred grams of a mineral dressed $TiO_2$ ore similar to that used in Example 4 were mixed with 2.94 grams of $Na_2CO_3$ in a similar fashion as in Example 4. The mixture was calcined in air in a muffle furnace at 1,000°C for 60 minutes. After calcination, the sample was cooled and leached with 3% (by weight) HCl at 9% pulp density, 90°C for 60 minutes.

The leached ore was filtered when still hot, washed and dried. The dried ore was then mixed with charcoal (-80 mesh) at a weight ratio of about 10 parts ore: 1 part charcoal. The mixing was carried out in a vibratory shaker for 30 seconds. The mixture was roasted in a combustion boat under the cover of a sheet of graphite in a muffle furnace. The roasting was done at 750°C for a duration of 60 minutes. After roasting and cooling the ore was subjected to wet magnetic separation with a permanent magnet (~ 900 Gauss). The final, nonmagnetic fraction of the ore has a composition as shown in Table 5.

## TABLE 1 — EXAMPLES 1-3
### Elemental Analysis (Dry Basis, Weight % Oxides)

|  | (1) Analysis of Feed | (2) Analysis of Treated Sample – Example 1 | (3) Analysis of Treated Sample – Example 2 | (4) Analysis of Treated Sample – Example 3 |
|---|---|---|---|---|
| $TiO_2$ | 55.4 | 61.8 | 62.0 | 61.9 |
| $Fe_2O_3$ | 24.3 | 28.5 | 27.2 | 27.1 |
| $Al_2O_3$ | 4.40 | 1.49 | 1.38 | 1.88 |
| $CaO$ | 1.62 | 0.10 | 0.07 | 0.17 |
| $BaO$ | 0.35 | 0.11 | 0.12 | 0.13 |
| $SrO$ | 0.36 | <0.02 | <0.02 | <0.02 |
| $Cr_2O_3$ | 0.33 | 0.27 | 0.27 | 0.27 |
| $MnO$ | 0.90 | 0.91 | 0.92 | 0.97 |
| $Nb_2O_5$ | 0.63 | 0.67 | 0.68 | 0.69 |
| $P_2O_5$ | 4.77 | 1.09 | 1.07 | 1.79 |
| $SiO_2$ | 2.09 | 1.05 | 1.01 | 1.27 |
| $V_2O_5$ | 0.32 | 0.26 | 0.26 | 0.26 |
| $ZrO_2$ | 0.33 | 0.28 | 0.27 | 0.29 |
| $Y_2O_3$ | 0.029 | <0.02 | <0.02 | <0.02 |
| $La_2O_3$ | 0.45 | 0.32 | 0.23 | 0.30 |
| $CeO_2$ | 0.94 | 0.79 | 0.59 | 0.81 |
| $Nd_2O_3$ | 0.40 | 0.26 | 0.20 | 0.27 |
| $ThO_2$ | 320 ppm | 310 ppm | 270 ppm | 310 ppm |
| $U_3O_8$ | 130 ppm | 70 ppm | 50 ppm | 100 ppm |

9

TABLE 2 – EXAMPLE 4
Elemental Analysis (Dry Basis, Weight % Oxides)

| Component As Oxides | (1) Feed | (2) NM* | (3) Strength of FeCl$_3$ Solution, Weight % 5 | (4) 10 | (5) 20 | (6) 30 | (7) 40 |
|---|---|---|---|---|---|---|---|
| TiO$_2$ | 54.5 | 69.0 | 80.3 | 79.9 | 81.1 | 81.1 | 79.9 |
| Fe$_2$O$_3$ | 23.7 | 8.5 | 10.1 | 10.3 | 9.3 | 9.2 | 10.1 |
| Al$_2$O$_3$ | 5.8 | 4.21 | 2.75 | 2.34 | 1.76 | 1.82 | 2.26 |
| CaO | 1.20 | 1.29 | 0.09 | 0.11 | 0.10 | 0.11 | 0.08 |
| Cr$_2$O$_3$ | 0.34 | 0.27 | 0.12 | 0.12 | 0.11 | 0.11 | 0.12 |
| MnO | 1.48 | 0.45 | 0.30 | 0.31 | 0.27 | 0.27 | 0.29 |
| Nb$_2$O$_5$ | 0.66 | 1.05 | 1.14 | 1.14 | 1.16 | 1.16 | 1.13 |
| P$_2$O$_5$ | 5.21 | 4.45 | 1.60 | 1.59 | 1.53 | 1.51 | 1.58 |
| SiO$_2$ | 2.65 | 2.07 | 1.08 | 1.06 | 1.36 | 1.51 | 1.41 |
| V$_2$O$_5$ | 0.33 | 0.25 | 0.10 | 0.11 | 0.10 | 0.10 | 0.11 |
| ZrO$_2$ | 0.50 | 0.56 | 0.52 | 0.53 | 0.50 | 0.50 | 0.54 |
| SrO | 0.48 | 0.32 | <.02 | <.02 | <.02 | <.02 | <.02 |
| Y$_2$O$_3$ | 0.04 | 0.09 | 0.04 | 0.04 | 0.03 | 0.03 | 0.03 |
| BaO | 0.47 | 0.32 | 0.07 | 0.07 | <.05 | <.05 | <.05 |
| La$_2$O$_3$ | 0.34 | 0.42 | 0.30 | 0.29 | 0.24 | 0.24 | 0.23 |
| CeO$_2$ | 0.74 | 0.87 | 0.64 | 0.62 | 0.55 | 0.55 | 0.50 |
| Nd$_2$O$_3$ | 0.31 | 0.35 | 0.27 | 0.27 | 0.23 | 0.22 | 0.20 |
| ThO$_2$ (ppm) | 280 | 350 | 320 | 290 | 280 | 280 | 280 |
| U$_3$O$_8$ (ppm) | 140 | 150 | 120 | 120 | 110 | 110 | 110 |

* Nonmagnetic fraction resulting from roasting and wet
 magnetic separation of the feed ore.

## TABLE 3 - EXAMPLE 5
### Elemental Analysis (Dry Basis, Weight % Oxides)

|  | MINERAL DRESSED $TiO_2$ ANATASE ORE | NM* | FIXED BED | FLUID BED |
|---|---|---|---|---|
| $TiO_2$ | 64.50 | 75.1 | 84.50 | 83.50 |
| $Fe_2O_3$ | 22.70 | 5.8 | 6.36 | 6.40 |
| $Al_2O_3$ | 5.80 | 3.90 | 1.84 | 2.40 |
| $CaO$ | 1.20 | 1.0 | 0.10 | 0.11 |
| $BaO$ | 0.47 | 0.35 | 0.05 | 0.05 |
| $SrO$ | 0.48 | 0.32 | 0.04 | 0.08 |
| $Cr_2O_3$ | 0.34 | 0.2 | 0.10 | 0.09 |
| $MnO$ | 1.48 | 0.55 | 0.23 | 0.25 |
| $Nb_2O_5$ | 0.66 | 1.11 | 1.21 | 1.16 |
| $P_2O_5$ | 5.21 | 4.25 | 1.87 | 1.47 |
| $SiO_2$ | 2.65 | 2.26 | 1.00 | 0.82 |
| $V_2O_5$ | 0.33 | 0.2 | 0.09 | 0.09 |
| $ZrO_2$ | 0.50 | 0.4 | 0.44 | 0.45 |
| $Y_2O_3$ | 0.04 | 0.08 | 0.01 | 0.04 |
| $La_2O_3$ | 0.34 | 0.61 | 0.46 | 0.50 |
| $CeO_2$ | 0.74 | 1.20 | 0.98 | 0.99 |
| $Nd_2O_3$ | 0.31 | 0.50 | 0.34 | 0.38 |
| $ThO_2$ | 280 ppm | 420 | 360 | 380 |
| $U_3O_8$ | 140 ppm | 150 | 130 | 100 |

\* Nonmagnetic fraction resulting from roasting and wet magnetic separation of the feed ore.

### TABLE 4 -- EXAMPLE 6
#### Elemental Alalysis (Dry Basis – Weight % Oxides)

| | (1) COMPOSITION OF FEED ORE | (2) COMPOSITION OF ORE AFTER MINERAL DRESSING |
|---|---|---|
| $TiO_2$ | 26.2 | 62.5 |
| $Fe_2O_3$ | 55.6 | 16.1 |
| $Al_2O_3$ | 5.02 | 3.75 |
| $CaO$ | 0.46 | 1.16 |
| $BaO$ | 0.71 | 0.60 |
| $SrO$ | 0.30 | 0.43 |
| $Cr_2O_3$ | 0.57 | 0.29 |
| $MnO$ | 1.85 | 0.49 |
| $Nb_2O_5$ | 0.15 | 0.61 |
| $P_2O_5$ | 3.79 | 3.88 |
| $SiO_2$ | 1.38 | 3.06 |
| $V_2O_5$ | 0.50 | 0.54 |
| $ZrO_2$ | 0.12 | 0.24 |
| $Y_2O_3$ | 0.02 | 0.05 |
| $La_2O_3$ | 0.32 | 0.49 |
| $CeO_2$ | 0.66 | 0.99 |
| $Nd_2O_3$ | 0.36 | 0.43 |
| $Th$ (ppm) | 340 | 455 |
| $U$ (ppm) | 50 | 85 |
| $Th + U$ (ppm) | 390 | 540 |
| $H$ | 0.533 | 0.471 |

## Table 5 – Example 10

### Elemental Analysis (Dry Basis Weight % Oxides)

| | (1) Analysis of Feed | (2) Analysis of $Na_2CO_3$ Roasted & Leached Ore | (3) Analysis of Charcoal Roasted & Magnetic Separated Ore |
|---|---|---|---|
| $TiO_2$ | 55.6 | 62.96 | 82.51 |
| $Fe_2O_3$ | 24.5 | 26.73 | 6.15 |
| $Al_2O_3$ | 5.40 | 2.10 | 2.45 |
| $CaO$ | 1.60 | 0.13 | 0.15 |
| $BaO$ | 0.40 | 0.05 | 0.05 |
| $SrO$ | 0.41 | 0.02 | 0.02 |
| $Cr_2O_3$ | 0.35 | 0.10 | 0.22 |
| $MnO$ | 1.30 | 0.59 | 0.25 |
| $Nb_2O_3$ | 0.65 | 0.65 | 0.98 |
| $P_2O_5$ | 5.11 | 0.83 | 1.10 |
| $SiO_2$ | 2.66 | 1.18 | 1.06 |
| $V_2O_5$ | 0.35 | 0.31 | 0.38 |
| $ZrO_2$ | 0.34 | 0.30 | 0.36 |
| $Y_2O_3$ | 0.03 | 0.02 | 0.03 |
| $La_2O_3$ | 0.49 | 0.34 | 0.64 |
| $CeO_2$ | 1.01 | 0.73 | 1.05 |
| $Nd_2O_3$ | 0.44 | 0.99 | 0.50 |
| Th (ppm) | 290 | 230 | 280 |
| U (ppm) | 120 | 30 | 50 |

## Claims

1. Process for purifying $TiO_2$ ore comprising:

(a) roasting particulate $TiO_2$ ore with an effective amount of an alkali metal compound comprising alkali metal carbonates, hydroxides, chlorides or mixtures thereof at a temperature and for a time sufficient to convert substantially the alkali metal, alkaline earth metal, rare earth metal, aluminum, phosphorous, thorium, uranium, chromium, manganese, silicon, vanadium and yttrium impurities in the ore to a form which is substantially soluble in the leaching step (b) below,

(b) leaching the product of step (a) with an effective amount of an aqueous nonsulfuric mineral acid solution at a temperature and for a time sufficient to solubilize substantially the alkali metal, alkaline earth metal, rare earth metal, aluminum, phosphorous, thorium, uranium, chromium, manganese, silicon, vanadium and yttrium impurities present to form a leachate, and

(c) removing the leachate from the product of step (b).

2. The process of claim 1 wherein the alkali metal compound comprises sodium carbonate, and the acid comprises ferric chloride, nitric acid, hydrochloric acid or mixtures thereof.

3. The process of claim 2 wherein the sodium carbonate is present in an amount of about 1-20% by weight, based on the weight of the $TiO_2$ ore, the acid is present in an amount of about 1-40% by weight, based on the total weight of the solution, the $TiO_2$ ore has a particle size of about -20 mesh to +200 mesh, and prior to step (a) the ore has been subjected to mineral dressing.

4. Process of claim 3 wherein the acid is present in an amount of about 1-10% by weight.

5. Process of claim 3 wherein the acid is present in an amount of about 1-6% by weight.

6. The process of claim 3 wherein step (a) is carried out at a temperature of about 600-1,100°C and for a time of about 10 minutes to four hours, and step (b) is carried out at a temperature of about ambient temperature to the boiling point of the leachate and for a time of about 10 minutes to four hours.

7. The process of claim 4 wherein step (a) is carried out at a temperature of about 600-1,100°C and for a time of about 10 minutes to four hours, and step (b) is carried out at a temperature of about ambient temperature to the boiling point of the leachate and for a time of about 10 minutes to four hours.

8. The process of claim 5 wherein step (a) is carried out at a temperature of about 600-1,100°C and for a time of about 10 minutes to four hours, and step (b) is carried out at a temperature of about ambient temperature to the boiling point of the leachate and for a time of about 10 minutes to four hours.

9. Process of claim 1 wherein the alkali metal compound consists essentially of alkali metal carbonates, hydroxides or mixtures thereof; there is incorporated in step (a) an effective amount of a reducing agent to convert substantially the nonmagnetic iron containing minerals in the ore to a magnetic form; and prior to step (b), the product of step (a) is subjected to a magnetic separation process which substantially removes the magnetic form of the iron containing minerals.

10. The process of claim 9 wherein the alkali metal compound is sodium carbonate, the acid comprises ferric chloride, nitric acid, hydrochloric acid, or mixtures thereof, and the reducing agent is a carbonaceous containing material.

11. The process of claim 10 wherein each of the reducing agent and sodium carbonate is present in an amount of about 1-20% by weight, based on the weight of the $TiO_2$ ore, and the acid is present in an amount of about 1-40% by weight, based on the total weight of the solution, the $TiO_2$ ore has a particle size of about -20 mesh to +200 mesh, and prior to step (a), the ore has been subjected to mineral dressing.

12. The process of claim 11 wherein the acid is present in an amount of about 1-10% by weight.

13. The process of claim 1 wherein the acid is present in an amount of about 1-6% by weight.

14. The process of claim 11 wherein step (a) is carried out at a temperature of about 600-1,100°C and for a time of about 10 minutes to four hours, and step (b) is carried out at a temperature of about ambient temperature to the boiling point of the leachate and for a time of about 10 minutes to four hours.

15. The process of claim 12 wherein step (a) is carried out at a temperature of about 600-1,100°C and for a time of about 10 minutes to four hours, and step (b) is carried out at a temperature of about ambient temperature to the boiling point of the leachate and for a time of about 10 minutes to four hours.

16. The process of claim 3 wherein step (a) is carried out at a temperature of about 600-1,100°C and for a time of about 10 minutes to four hours, and step (b) is carried out at a temperature of about ambient temperature to the boiling point of the leachate and for a time of about 10 minutes to four hours.

17. Process of claim 1 wherein prior to step (a), the $TiO_2$ ore is subjected to the following process:

(1) adding to the ore an effective amount of reducing agent to convert substantially the nonmagnetic iron containing minerals in the ore to magnetic form during the roasting step 2 below,

(2) roasting the ore and reducing agent at a temperature and for a time sufficient to convert substantially the nonmagnetic form of the ore to magnetic form, and

(3) subjecting the product of step (2) to a magnetic separation process which substantially removes the magnetic form of the iron containing minerals.

18. Process of claim 1 wherein between step (a) and step (b), the $TiO_2$ ore is subjected to the following process:

(1) adding to the ore an effective amount of reducing agent to convert substantially the nonmagnetic iron containing minerals in the ore to magnetic form during the roasting step 2 below,

(2) roasting the ore and reducing agent at a temperature and for a time sufficient to convert substantially the nonmagnetic form of the ore to magnetic form, and

(3) subjecting the product of step (2) to a magnetic separation process which substantially removes the magnetic form of the iron containing minerals.

19. Process of claim 1 wherein after step (c), the TiO₂ ore is subjected to the following process:

(1) adding to the ore an effective amount of reducing agent to convert substantially the nonmagnetic iron containing minerals in the ore to magnetic form during the roasting step 2 below,

(2) roasting the ore and reducing agent at a temperature and for a time sufficient to convert substantially the nonmagnetic form of the ore to magnetic form, and

(3) subjecting the product of step (2) to a magnetic separation process which substantially removes the magnetic form of the iron containing minerals.

20. The process of any one of claims 1-19 wherein the impurities comprise aluminum, calcium, barium, strontrium, chromium, manganese, phosphorus, silicon, vanadium, yttrium, lanthanum, neodymium cerium, thorium and uranium.

21. The process of any one of claims 1-19 wherein the impurities comprise calcium, barium, strontium, thorium and uranium.

22. TiO₂ pigment which is produced by the chloride process from TiO₂ ore processed in accordance with any one of claims 1-19.

23. TiO₂ pigment which is produced by the chloride process from TiO₂ ore processed in accordance with any one of claims 1-19 wherein the impurities comprise aluminum, calcium, barium, strontium, chromium, manganese, phosphorus, silicon, vanadium, yttrium, lanthanum, cerium, neodymium, thorium and uranium.